Europäisches Patentamt

European Patent Office

Office européen des brevets

(11) Veröffentlichungsnummer: **0 174 552**
**A1**

## (12) EUROPÄISCHE PATENTANMELDUNG

(21) Anmeldenummer: 85110786.2

(22) Anmeldetag: 28.08.85

(51) Int. Cl.⁴: **G 01 F 1/08**
**G 01 F 1/06**

(30) Priorität: 07.09.84 DE 8426431 U

(43) Veröffentlichungstag der Anmeldung:
19.03.86 Patentblatt 86/12

(84) Benannte Vertragsstaaten:
AT BE CH DE FR GB IT LI LU NL SE

(71) Anmelder: DEVELCONTER R+D LTD.
23, Great Castle Street
London W1N 8NQ(GB)

(72) Erfinder: Natale, Gerardo
Viale Pilone 72
I-14100 Asti(IT)

(74) Vertreter: Patentanwälte Kohler - Schwindling - Späth
Hohentwielstrasse 41
D-7000 Stuttgart 1(DE)

(54) Einstrahl-Flügelradzähler.

(57) Die Erfindung bezieht sich auf einen Einstrahl-Flügelradzähler für Flüssigkeiten, insbesondere Wasserzähler. Sie besteht darin, daß der Querschnitt eines geraden Zuleitungsabschnittes (4) unmittelbar vor dem Flügelrad (17) in mehrere, über den Querschnitt verteilt angeordnete Kanäle (10 bis 14, 19, 20) aufgeteilt ist, deren Länge größer als ihr Durchmesser ist.

Fig. 3

Fig. 4

Anmelderin:

DEVELCONTER R+D LTD.
23, Great Castle Street
LONDON WIN. 8 NQ
Großbritannien

Stuttgart, den 24.07.1985

Gm 1091 EP   K/C

Vertreter:

Kohler-Schwindling-Späth
Patentanwälte
Hohentwielstraße 41
7000 Stuttgart 1

Einstrahl-Flügelradzähler

Die Erfindung bezieht sich auf einen Einstrahl-Flügelradzähler für Flüssigkeiten, insbesondere auf einen Wasserzähler. Diese werden überwiegend für die Verbrauchsabrechnung von kaltem und warmem Wasser eingesetzt. In Verteilerstationen ist es oft schwierig, die einzelnen Meßgeräte an die Verteilerrohre anzuschließen und ihre Einbaulage ist sehr unterschiedlich. Trotzdem werden an die Genauigkeit dieser Meßgeräte hohe Anforderungen gestellt, sie unterliegen der Eichpflicht. Die Meßgenauigkeit bekannter Einstrahl-Flügelradzähler hängt in hohem Maße davon ab, wie das Flügelrad angeströmt wird. Um eine ausreichende Meßgenauigkeit zu erhalten, ist es bekannt, vor dem Meßgerät eine gerade Rohrstrecke vorzusehen, deren Länge 5 bis 10 x so groß wie der Nennweiten-Durchmesser dieses Rohrabschnittes ist. Diese Bedingung kann jedoch sehr oft, insbesondere in Verteilerstationen, nicht eingehalten werden. Die Folge hiervon ist eine ungenaue Messung und damit eine ungenaue Verbrauchsabrechnung, die häufig zu Auseinandersetzungen führt. Die auftretenden Fehler in der Meßgenauigkeit sind bei kleiner Durchflußmenge besonders groß. Kleine Durchflußmengen sind jedoch ein bei Wasserzählern häufig vorkommender Betriebszustand, so daß diese Fehler in der Praxis ein ernstes Problem darstellen.

Der Erfindung liegt die Aufgabe zugrunde, die Meßeigenschaften von Einstrahl-Flügelradzählern zu verbessern, insbesondere diese weitgehend unabhängig von den Rohrleitungseinflüssen am Eingang zu machen.

Die Erfindung besteht darin, daß der Querschnitt eines geraden Zuleitungsabschnittes unmittelbar vor dem Flügelrad in mehrere, über den Querschnitt verteilt angeordnete Kanäle aufgeteilt ist, deren Länge größer als ihr Durchmesser ist, vorzugsweise größer als oder gleich 2,5 bis 7 mal bei einer Ausführungsform der Erfindung größer oder gleich 5 mal dem Kanaldurchmesser ist.

Bei dieser Anordnung wirkt auf das Zähler-Flügelrad jeder
einzelne Kanal wie ein Strahlrohr auf ein entsprechend
kleineres Flügelrad. Die anderen Kanäle können als Nebenstrom, jedoch wiederum mit einem aktiven Anteil auf das
Flügelrad verstanden werden. In der Summe ergeben die einzelnen Kanäle ein auf das Flügelrad wirkendes Strömungsprofil, das eine sehr genaue Messung erlaubt, insbesondere die
Meßgenauigkeit im unteren Durchflußmengenbereich stark
verbessert. Ein wesentlicher Vorteil liegt noch darin, daß
längere gerade Rohrleitungsabschnitte vor dem Meßgerät nicht
erforderlich sind. Da der Durchmesser der einzelnen Kanäle
sehr viel kleiner ist als der Nennweitendurchmesser der
Zuleitung, so ist die Länge der Kanäle auch bei Einhaltung
der vorgenannten Bedingungen relativ klein, so daß Schwierigkeiten beim Einbau kaum auftreten. Schließlich hat sich
auch herausgestellt, daß bei der erfindungsgemäßen Ausbildung des Einlaßquerschnittes die Einbaulage des Gerätes
seine Meßgenauigkeit praktisch nicht mehr beeinflußt.

Zwar ist es bereits bekannt, in den Einlaufquerschnitt ein
Sieb einzuschalten. Dieses Sieb dient jedoch zum Auffangen
von Verunreinigungen. Es kann die Anströmung des Flügelrades
in aller Regel nicht beeinflussen, weil der Abstand des
Siebes vom Flügelrad zu groß ist, als daß sich bei den
dünnen Maschen des Siebes ein günstiges Anströmprofil ausbilden könnte. Zum anderen ändert sich an diesen Sieben
durch das Absetzen der ausgesiebten Teile im Laufe der Zeit
der Durchflußquerschnitt und damit ebenfalls ein sich möglicherweise hinter dem Sieb ausbildendes Strömungsprofil. Der
erfindungsgemäße Effekt wird daher mit diesen Sieben weder
beabsichtigt noch tritt dieser Effekt ein.

Es ist zweckmäßig, das durch die erfindungsgemäße Ausbildung gewonnene Anströmprofil möglichst unmittelbar auf das Zähler-Flügelrad wirken zu lassen. Bei einer Ausführungsform der Erfindung enden daher die inneren Enden der Kanäle an der Innenwand der Flügelradkammer und diese Kanalenden sind der Wölbung der Wand der Flügelradkammer angepaßt.

Bei Ausführungsformen der Erfindung können alle Kanäle gleich lang sein oder aber ist ihre Länge verschieden. Auch kann der Querschnitt der einzelnen Kanäle gleich groß oder aber verschieden sein. Insbesondere bei der Ausführungsform der Erfindung, bei der die Kanäle in die Innenwand der Flügelradkammer münden, können, damit die äußeren Enden der Kanäle in einer Ebene senkrecht zur Strömungsrichtung beginnen, die Kanäle eine verschiedene Länge aufweisen. Insbesondere hierbei kann es bei Ausführungsformen der Erfindung zweckmäßig sein, die Querschnitte der einzelnen Kanäle bei vorgegebener (unterschiedlicher) Länge so zu wählen, daß das Verhältnis Länge zu Querschnitt bei allen Kanälen das gleiche ist. Bei anderen Ausführungsformen der Erfindung können jedoch auch verschieden lange Kanäle den gleichen Querschnitt aufweisen.

Der Querschnitt der Kanäle kann über die ganze Länge der Kanäle gleichmäßig sein, er kann rechteckig oder aber zylindrisch sein. Bei anderen Ausführungsformen der Erfindung können die Kanäle konisch sein derart, daß der Auslaßquerschnitt kleiner ist als der Einlaßquerschnitt.

Bei Ausführungsformen der Erfindung sind die Kanäle in einem Einsatz angeordnet, der entweder in den Rohrabschnitt vor dem Gerät oder aber, gemäß einer anderen Ausführungsform, in
den Einlaßstutzen des Meßgerätes einsetzbar ist.

Weitere Merkmale der Erfindung ergeben sich aus der folgenden Beschreibung einer Ausführungsform der Erfindung in
Verbindung mit den Ansprüchen und der Zeichnung. Die einzelnen Merkmale können je für sich oder zu mehreren bei einer
Ausführungsform der Erfindung verwirklicht sein.

In der Zeichnung ist eine Ausführungsform der Erfindung
dargestellt. Es zeigen:

Fig. 1      eine Seitenansicht des von der Flüssigkeit
            durchströmten Unterteiles des Messgerätes;

Fig. 2      eine gegenüber Fig. 1 um 90° gedrehte Ansicht
            dieses Unterteils;

Fig. 3      einen Schnitt nach der Linie III-III der Fig. 2;

Fig. 4      zeigt die Vorderansicht eines Kanäle aufweisenden
            Einsatzes für den Einlaufstutzen des Unterteils
            gemäß den Fig. 1 bis 3 in größerem Maßstab in der
            Ansicht entsprechend dem Pfeil IV in der Fig. 5;

Fig. 5      einen Schnitt nach der Linie V-V der Fig. 4;

Fig. 6      einen Schnitt nach der Linie VI-VI der Fig. 4.

Bei der in der Zeichnung dargestellten Ausführungsform der
Erfindung ist in einem Gehäuseunterteil 1 eine wasserdicht
gegen das nicht gezeichnete Meß- und Anzeigewerk abgedichtete Meßkammer 2 vorgesehen, in der ein mehrere Flügel aufweisendes Flügelrad um eine zentrisch in der Meßkammer 2 angeordnete Achse drehbar gelagert ist. Die Drehung des Flügelrades wird beispielsweise über eine Magnetkupplung auf das nicht dargestellte Meßwerk übertragen.

Das Wasser oder eine andere Flüssigkeit, deren Durchlaufmenge gemessen werden soll, tritt über den Einlaufstutzen 4 in die Meßkammer 2 ein. Am Flansch 5, in dem die Rohrleitung angeschlossen wird, befindet sich eine kleine Ausdrehung 6, die exzentrisch zu dem zylindrischen Querschnitt des Einlaufstutzens 4 angeordnet ist.

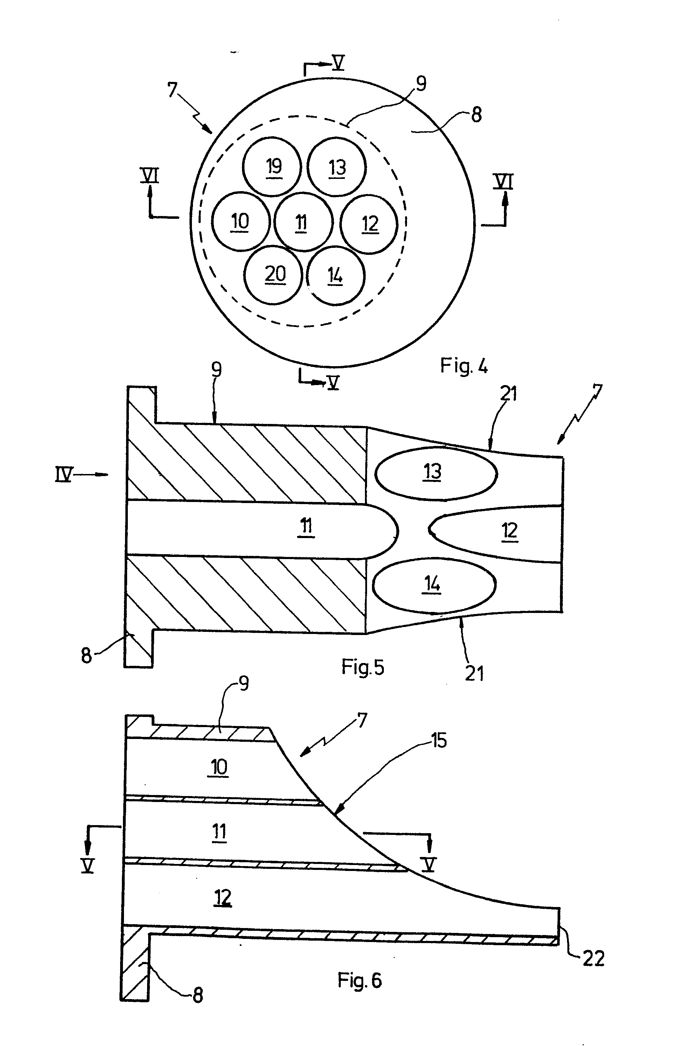

In den Einlaufstutzen 4 wird ein Einsatz 7 eingesetzt, der einen Flansch 8 aufweist, der in gleicher Weise exzentrisch zu dem zylindrischen Abschnitt 9 des Einsatzes 7 angeordnet ist wie die Aussparung 6 zum Einlaufstutzen 4 und der in diese Aussparung 6 paßt. Dadurch ist gewährleistet, daß der Einsatz 7 stets in der richtigen Lage in den Einlaufstutzen 4 eingesetzt wird. Der Einsatz 7 weist sieben im Querschnitt zylindrische Kanäle 10 bis 14, 19, 20 auf, die sich über die ganze Länge des Einsatzes 7 erstrecken. Der Einsatz ist an seinem der Meßkammer 2 zugewandten Ende in der Form einer zylindersegmentförmigen Fläche 15 abgenommen, die die Fortstetzung der zylinderförmigen Wand 16 der Meßkammer 2 im Bereich des Einlaufstutzens 4 bildet. Die Kanäle sind möglichst gleichmäßig über den Querschnitt des Einsatzes 7 verteilt, wie dies in Fig. 4 dargestellt ist. Bei der dargestellten Ausführungsform der Erfindung weist das Flügelrad 17 z.B. acht Flügel 18 auf, die bis nahe an die Wand der Meßkammer 2 reichen und deren Höhe gleich oder kleiner als der Durchmesser des Einlaufstutzens 4 ist.

Bei der dargestellten Ausführungsform der Erfindung beträgt der Druchmesser des Einlaufstutzens 4 etwa 14 mm. Die größte Länge des Einsatzes 7, nämlich im Bereich des Kanals 12 beträgt etwa 30 mm, seine kleinste Länge, nämlich im Bereich des Kanals 10, beträgt etwa 10 mm. Der Durchmesser aller sieben Kanäle beträgt jeweils 4 mm, die Länge des Kanals 12 in der Achse beträgt 30 mm, die Länge seines in Fig. 6 oberen Randes beträgt etwa 20 mm, die mittlere Länge des Kanals 11, in der Achse gemessen, etwa 16 mm und die mittlere Länge des Kanals 10, ebenfalls in seiner Achse gemessen etwa 11,5 mm. Die Länge der Kanäle 13 und 14 liegen zwischen den Maßen der benachbarten Kanäle. Man sieht, daß die Bedingung, daß die Länge eines Kanals größer ist als fünf mal sein Durchmesser, bei den Kanälen 12, 13 und 14 eingehalten ist, bei den Kanälen 10 und 11 und den Kanälen 19 und 20 jedoch nicht mehr. Es hat sich jedoch in der Praxis gezeigt, daß es genügt, wenn bereits einige, im vorliegenden Falle drei Kanäle die vorgenannte Bedingung erfüllen. Bereits dann wird die Meßgenauigkeit in den unteren Bereichen deutlich erhöht. Sollen bei gleicher Länge des Einsatzes 7 noch mehr Kanäle die Bedingung, daß die Länge des Kanals größer ist als fünf mal sein Durchmesser, erfüllen, so kann der Durchmesser der kürzeren Kanäle 10, 19 und 20 entsprechend verringert werden. In diesem Falle können dann in diesem Bereich eine größere Anzahl von Kanälen vorgesehen werden, vorzugsweise so viele, wie bei kleineren Durchmesseren in diesem Bereich des Einsatzes Platz finden.

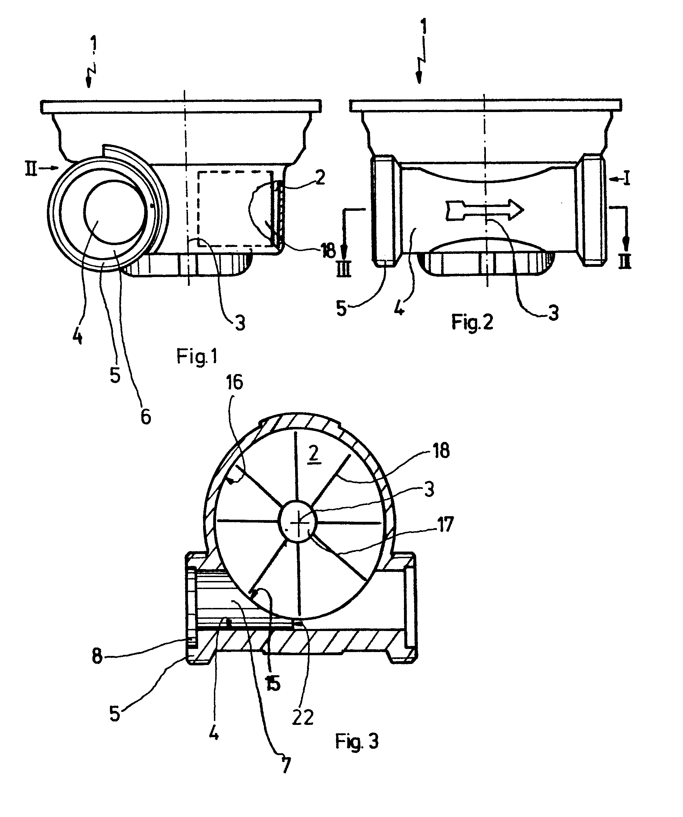

Der Einsatz 7 weist an seinem inneren Ende in der in Fig. 5 dargestellten Ansicht eine Verjüngung auf, die daher rührt, daß der zylindrische Einlaufstutzen 4, wie aus den Fig. 2 und 3 ersichtlich, die Meßkammer 2 so durchdringt, daß die Achse des Einlaufstutzens 4 die zylinderförmige Wand der Kammer 2 schneidet, nicht aber nur tangiert. Aus demselben Grunde mündet die Stirnfläche 15 am inneren Ende des Einsatzes 7 in eine zur Achse des Einsatzes 7 rechtwinklige Stirnfläche 22, die in der beschriebenen Ausführungsform in der Darstellung der Fig. 6 etwa 3 mm hoch ist.

Patentansprüche

1.  Einstrahl-Flügelradzähler für Flüssigkeiten, insbesondere Wasserzähler, dadurch gekennzeichnet, daß der Querschnitt eines geraden Zuleitungsabschnittes (4) unmittelbar vor dem Flügelrad (17) in mehrere, über den Querschnitt verteilt angeordnete Kanäle (10 bis 14, 19, 20) aufgeteilt ist, deren Länge größer als ihr Durchmesser ist.

2.  Gerät nach Anspruch 1, dadurch gekennzeichnet, daß die Länge mindestens eines der Kanäle größer als oder gleich 2,5 bis 7 mal dem Maß des Kanalquerschnitts ist.

3.  Gerät nach Anspruch 2, dadurch gekennzeichnet, daß die Länge mindestens eines der Kanäle größer als oder gleich 5 mal dem Maß des Kanaldurchmessers ist.

4.  Gerät nach einem der vorhergehenden Ansprüche, dadurch gekennzeichnet, daß das innere Ende der Kanäle an die Innenwand (16) der das Flügelrad (17) enthaltenden Meßkammer (2) anschließt und daß die durch die Zwischenräume zwischen den einzelnen Kanälen gebildete innere Stirnfläche (15) die gleiche Wölbung wie die Innenwand (16) der Meßkammer (2) aufweist.

5. Gerät nach einem der vorhergehenden Ansprüche, dadurch gekennzeichnet, daß das innere Ende der Kanäle einen kleineren Querschnitt aufweist als ihr äußeres Ende.

6. Gerät nach Anspruch 5, dadurch gekennzeichnet, daß die Konizität der Kanäle (Auslaßquerschnitt durch Einlaßquerschnitt) geringer ist als 1 : 1,5 .

7. Gerät nach einem der vorhergehenden Ansprüche, dadurch gekennzeichnet, daß die Kanäle (10 bis 14, 19, 20) in einem in den geraden Abschnitt (4) der Zuleitung einsetzbaren Einsatz (7) angeordnet sind.

8. Gerät nach Anspruch 7, dadurch gekennzeichnet, daß die Außenmaße des Einsatzes (7) mit den Innenmaßen des Einlaßstutzens (4) des Meßgerätes übereinstimmen.

9. Gerät nach einem der vorhergehenden Ansprüche, dadurch gekennzeichnet, daß die einzelnen Kanäle (11 bis 20) einen unterschiedlichen Querschnitt aufweisen.

10. Gerät nach Anspruch 9, dadurch gekennzeichnet, daß kürzere Kanäle (10, 19, 20) einen kleineren Querschnitt auweisen als längere Kanäle (12, 13, 14).

½

0174552

Fig. 1

Fig. 2

Fig. 3

0174552

Fig. 4

Fig. 5

Fig. 6

0174552

| | **EINSCHLÄGIGE DOKUMENTE** | | EP 85110786.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| X | GB - A - 13 440 (BURNETT) <br> * Fig. 1; Seite 2, Zeilen 4-11 * | 1,2,4, 9 | G 01 F 1/08 <br> G 01 F 1/06 | |
| X | CH - A - 276 752 (BÜRGIN) <br> * Fig. 1,2; Patentanspruch * | 1,4,7 | | |
| X | US - A - 2 949 764 (KNAUTH) <br> * Fig. 1-4 * | 1-3,7, 8 | | |
| X | DE - C - 79 348 (DREYER) <br> * Fig. * | 1,5,6, 9,10 | | |
| | ---- | | RECHERCHIERTE SACHGEBIETE (Int Cl 4) | |
| | | | G 01 F 1/00 | |

Der vorliegende Recherchenbericht wurde für alle Patentansprüche erstellt.

| Recherchenort | Abschlußdatum der Recherche | Prüfer |
|---|---|---|
| WIEN | 13-12-1985 | BURGHARDT |